# EUROPÄISCHE PATENTSCHRIFT

(11) **EP 0 700 966 B1**
(45) Veröffentlichungstag und Bekanntmachung des Hinweises auf die Patenterteilung: **29.10.1997**
(21) Anmeldenummer: 95113445.1
(22) Anmeldetag: 26.08.1995
(51) Int. Cl.: C08L 51/04, C08L 25/12, C08L 33/12

(54) **Transparente, schlagzähe Formmassen mit hoher Spannungsrissbeständigkeit und matter Oberfläche**
Transparent, impact-resistant moulding compounds having a high stress crack resistance and a mat surface
Masses de moulage transparentes, résistantes aux chocs, ayant une résistance élevée à la figuration sous contrainte et présentant un aspect de surface mat

(30) Priorität: 06.09.1994 DE 4431732
(43) Veröffentlichungstag der Anmeldung: 13.03.1996
(73) Patentinhaber: BASF Aktiengesellschaft, 67063 Ludwigshafen (DE)
(72) Erfinder: Tiefensee, Kristin, Dr., D-67368 Westheim (DE); Güntherberg, Norbert, Dr., D-67346 Speyer (DE); Neumann, Rainer, Dr., D-67112 Mutterstadt (DE); Jahns, Ekkehard, Dr., D-69493 Hirschberg (DE)

(56) Entgegenhaltungen:
- EP-A- 0 062 223
- EP-A- 0 154 804
- EP-A- 0 582 951
- EP-A- 0 591 804
- EP-A- 0 599 067
- EP-A- 0 604 843

## Beschreibung

Die vorliegende Erfindung betrifft thermoplastische Formmassen, enthaltend eine Mischung aus im wesentlichen
(A) Wenigstens 15 Gew.-% eines Methacrylat-Polymerisates, erhältlich durch Polymerisation einer Mischung, bestehend im wesentlichen aus
   (A1) 90 bis 100 Gew.-%, bezogen auf (A), Methylmethacrylat, und
   (A2) bis 10 Gew.-%, bezogen auf (A), eines C₁-C₈-Alkylesters der Acrylsäure, und
(B) 10 bis 50 Gew.-% eines Copolymerisates, erhältlich durch Polymerisation einer Mischung, bestehend im wesentlichen aus
   (B1) 78 bis 88 Gew.-%, bezogen auf (B), eines vinylaromatischen Monomeren und
   (B2) 12 bis 22 Gew.-%, bezogen auf (B), eines Vinylcyanids
und
(C) 20 bis 50 Gew.-% eines Pfropfcopolymerisates, erhältlich im wesentlichen aus
   (C1) 50 bis 80 Gew.-% eines Kerns, erhältlich durch Polymerisation eines Monomerengemisches, bestehend im wesentlichen aus
      (C11) 50 bis 100 Gew.-% eines 1,3-Diens und
      (C12) 0 bis 50 Gew.-% eines vinylaromatischen Monomeren
      und
   (C2) 20 bis 50 Gew.-% einer Pfropfhülle, erhältlich durch Polymerisation eines Monomerengemisches in Gegenwart des Kern (C1), bestehend im wesentlichen aus
      (C21)40 bis 100 Gew.-% eines C₁-C₈-Alkylesters der Methacryl- oder Acrylsäure und
      (C22)0 bis 60 Gew.-% eines vinylaromatischen Monomeren,
      mit der Maßgabe, daß man die mittlere Teilchengröße (d₅₀) des Pfropfcopolymerisates im Bereich von 40 bis 500 nm wählt, und
(D) 0,5 bis 15 Gew.-% eines vernetzten Methacrylat-Polymerisates, erhältlich durch Polymerisation einer Mischung, bestehend im wesentlichen aus
   (D1) 80 bis 99,5 Gew.-% eines C₁-C₈-Alkylesters der Methacrylsäure,
   (D2) 0 bis 15 Gew.-% eines C₁-C₈-Alkylesters der Acrylsäure,
   (D3) 0,5 bis 5 Gew.-% eines mit D1 und D2 copolymerisierbaren vernetzenden Monomeren und
   (D4) 0 bis 10 Gew.-% eines polaren Monomeren, ausgewählt aus der Gruppe, bestehend aus Methacrylsäure, Acrylsäure, Hydroxyethylacrylat, Hydroxyethylmethacrylat, Dimethylaminoethylacrylat und Dimethylaminoethylmethacrylat,
   mit der Maßgabe, daß man die mittlere Teilchengröße (d₅₀) von D im Bereich von 50 bis 80.000 nm wählt,
   und
(E) 0 bis 20 Gew.-% üblichen Zusatzstoffen, bezogen auf die Summe der Komponenten A, B, C und D, wobei sich die Gew.-Prozentangaben von A, B, C und D auf 100 addieren und die Differenz zwischen dem Brechungsindex der Komponente C und dem des Gemisches der Komponenten A, B und D oder dem des Gemisches der Komponenten A, B, D und E weniger als 0,005 beträgt.

Des weiteren betrifft die Erfindung ein Verfahren zur Herstellung des erfindungsgemäßen thermoplastischen Formmassen, deren Verwendung und Formkörper daraus.

Die EP-A 62 223 beschreibt hochglänzende, transparente, schlagzähe, thermoplastische Formmassen aus einem harten Methylmethacrylat-Polymerisat, einem harten Styrol/Acrylnitril-Polymerisat und einem weichen Pfropfcopolymerisat von Alkyl(meth)acrylat und gegebenenfalls Styrol auf einen Kautschuk.

Die DE-A 41 25 857 beschreibt matte Folien aus Polymethylmethacrylat (PMMA) durch Zusatz von vernetzten Methacrylat-Teilchen. Für viele Anwendungen reicht jedoch die Zähigkeit und die Spannungsrißbeständigkeit nicht aus.

Der vorliegenden Erfindung lag daher die Aufgabe zugrunde, weitere thermoplastische Formmassen auf der Basis von PMMA und Styrol-Acrylnitril-(SAN)-Polymeren zur Verfügung zu stellen, die matt sind und gleichzeitig eine hohe Spannungsrißbeständigkeit und Zähigkeit aufweisen.

Demgemäß wurden die eingangs definierten thermoplastischen Formmassen gefunden.

Des weiteren wurde ein Verfahren zu deren Herstellung, ihre Verwendung zur Herstellung von Formkörpern sowie Formkörper, hergestellt aus den erfindungsgemäßen thermoplastischen Formmassen, gefunden.

Die erfindungsgemäßen thermoplastischen Formmassen enthalten im wesentlichen
(A) Wenigstens 15 Gew.-%, vorzugsweise von 30 bis 60 Gew.-%, eines Methacrylat-Polymerisates, erhältlich durch Polymerisation einer Mischung, bestehend im wesentlichen aus
   (A1) 90 bis 100 Gew.-%, vorzugsweise von 93 bis 97 Gew.-% bezogen auf (A), Methylmethacrylat, und
   (A2) 0 bis 10 Gew.-%, vorzugsweise von 3 bis 7 Gew.-%, bezogen auf (A), eines C₁-C₈-Alkylesters der Acrylsäure,
   mit der Maßgabe, daß man die Viskositätszahl im Bereich von 55 bis 60, vorzugsweise von 56 bis 58 (gemessen an einer 0,5 gew.-%igen Lösung in Dimethylformamid bei 23°C), wählt und
(B) 10 bis 50 Gew.-%, vorzugsweise von 10 bis 40 Gew.-%, eines Copolymerisates, erhältlich durch Polymerisation einer Mischung, bestehend im wesentlichen aus
   (B1) 78 bis 88 Gew.-%, vorzugsweise von 78 bis 84 Gew.-%, bezcgen auf (B), eines vinylaromatischen Monomeren und
   (B2) 12 bis 22 Gew.-%, vorzugsweise von 16 bis 22 Gew.-%, bezogen auf (B), eines Vinylcyanids
und
(C) 20 bis 50 Gew.-%, vorzugsweise von 30 bis 40 Gew.-%, eines Pfropfcopolymerisates, erhältlich im wesentlichen aus
   (C1) 50 bis 80 Gew.-%, vorzugsweise von 55 bis 70 Gew.-%, eines Kerns, erhältlich durch Polymerisation eines Monomerengemisches, bestehend im wesentlichen aus
      (C11) 50 bis 100 Gew.-%, vorzugsweise von 60 bis 80 Gew.-%, eines 1,3-Diens und
      (C12) bis 50 Gew.-%, vorzugsweise von 20 bis 40 Gew.-%, eines vinylaromatischen Monomeren
   und
(C2) 20 bis 50 Gew.-%, vorzugsweise von 30 bis 45 Gew.-%, einer Pfropfhülle, erhältlich durch Polymerisation eines Monomerengemisches in Gegenwart des Kern (C1), bestehend im wesentlichen aus
   (C21)40 bis 100 Gew.-%, vorzugsweise von 50 bis 80 Gew.-%, eines C₁-C₈-Alkylesters der Methacryl- oder Acrylsäure und
   (C22)0 bis 60 Gew.-%, vorzugsweise von 20 bis 50 Gew.-%, eines vinylaromatischen Monomeren,
   mit der Maßgabe, daß man die mittlere Teilchengröße (d50) des Pfropfcopolymerisates im Bereich von 40 bis 500 nm, vorzugsweise von 50 bis 300 nm, wählt,
und
(D) 0,5 bis 15 Gew.-%, vorzugsweise von 2 bis 10 Gew.-%, eines vernetzten Methacrylat-Polymerisates, erhältlich durch Polymerisation einer Mischung, bestehend im wesentlichen aus
   (D1) 80 bis 99,5 Gew.-%, vorzugsweise von 85 bis 99 Gew.-%, eines C₁-C₈-Alkylesters der Methacrylsäure,
   (D2) 0 bis 15 Gew.-%, vorzugsweise von 0 bis 12 Gew.-%, eines C₁-C₈-Alkylesters der Acrylsäure,
   (D3) 0,5 bis 5 Gew.-%, vorzugsweise von 1,5 bis 5 Gew.-%, eines mit D1 und D2 copolymerisierbaren vernetzenden Monomeren und
   (D4) 0 bis 10 Gew.-%, vorzugsweise von 0 bis 8 Gew.-%, eines polaren Monomeren, ausgewählt aus der Gruppe, bestehend aus Methacrylsäure, Acrylsäure, Hydroxyethylacrylat, Hydroxyethylmethacrylat, Dimethylaminoethylacrylat und Dimethylaminoethylmethacrylat,
   mit der Maßgabe, daß man die mittlere Teilchengröße (d₅₀) von D im Bereich von 50 bis 80.000 nm, vorzugsweise von 100 bis 60.000 nm, wählt,
   und
(E) 0 bis 20 Gew.-% üblichen Zusatzstoffen, vorzugsweise von 0 bis 10 Gew.-%, bezogen auf die Summe der Komponenten A, B, C und D, wobei sich die Gew.-Prozentangaben von A, B, C und D auf 100 addieren und die Differenz zwischen dem Brechungsindex der Komponente C und dem des Gemisches der Komponenten A, B und D oder dem des Gemisches der Komponenten A, B, D und E weniger als 0,005 beträgt.

Als C₁-C₈-Alkylester der Acrylsäure (Komponente A2) kann man Methylacrylat, Ethylacrylat, Propylacrylat, n-Butylacrylat, n-Pentylacrylat, n-Hexylacrylat, n-Heptylacrylat, n-Octylacrylat und 2-Ethylhexylacrylat sowie Mischungen davon einsetzen, vorzugsweise Methylacrylat, n-Butylacrylat, 2-Ethylhexylacrylat oder Mischungen davon, besonders bevorzugt Methylacrylat.

Die Methylmethacrylat-(MMA)-Polymerisate können durch Substanz-, Lösung- oder Perlpolymerisation nach bekannten Methoden hergestellt werden (siehe beispielsweise Kunststoff-Handbuch, Band IX, "Polymethacrylate", Vieweg/Esser, Carl-Hanser-Verlag 1975) und sind im Handel erhältlich. Bevorzugt setzt man Methacrylat-Polymerisate ein, deren Gewichtsmittel-Werte des Molekulargewichts im Bereich von 60.000 bis 300.000 liegen (bestimmt durch Lichtstreuung in Chloroform).

Als vinylaromatische Monomere (Komponente B1) kann man Styrol, ein- bis dreifach mit C₁-C₈-Alkylresten substituiertes Styrol wie p-Methylstyrol oder tert.-Butylstyrol sowie α-Methylstyrol, bevorzugt Styrol, einsetzen.

Als Vinylcyanid (Komponente B2) kann man Acrylnitril und/oder Methacrylnitril, bevorzugt Acrylnitril, einsetzen.

Außerhalb des oben angegebenen Bereiches der Zusammensetzung der Komponente B erhält man üblicherweise bei Verarbeitungstemperaturen über 240°C trübe Formmassen, die Bindenähte aufweisen.

Die Copolymerisate B können nach allen bekannten Verfahren hergestellt werden, wie durch Substanz-, Lösung-, Suspensions- oder Emulsions-Polymerisation, bevorzugt durch Lösungspolymerisation (siehe GB-A 14 72 195).

Als 1,3-Dien (Komponente C11) des Kerns des Pfropfcopolymerisats (Komponente C1) kann man Butadien und/oder Isopren einsetzen.

Als vinylaromatisches Monomer (Komponente C12) kann man Styrol oder ein in α-Stellung oder vorzugsweise am Kern mit einer (oder am Kern auch mehreren) C₁-C₈-Alkylgruppe(n), vorzugsweise Methyl, substituiertes Styrol einsetzen.

Bevorzugt weist der Kern des Pfropfcopolymerisats eine Glasübergangstemperatur von kleiner als 0°C auf und weist bevorzugt eine mittlere Teilchengröße von kleiner als 200 nm, besonders bevorzugt von 30 bis 150 nm, auf. Üblicherweise stellt man den Kern durch Emulsionspolymerisation her (siehe beispielsweise Encyclopedia of Polymer Science and Engineering, Vol. 1, S. 401 ff).

Als C₁-C₈-Alkylester der Methacryl- oder Acrylsäure (Komponente C21) verwendet man erfindungsgemäß Methylmethacrylat ("MMA"), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere, Methylacrylat ("MA"), Ethylacrylat, Propylacrylat, n-Butylacrylat, Isobutylacrylat, sek.-Butylacrylat, tert.-Butylacrylat, Pentylacrylat, Hexylacrylat, Heptylacrylat, Octylacrylat oder 2-Ethylhexylacrylat, wobei n-Butylacrylat besonders bevorzugt ist, sowie Mischungen dieser Monomere untereinander als auch mit den Methacrylaten.

Als vinylaromatische Monomere (Komponente C22) kann man Styrol, ein- bis dreifach mit C₁-C₈-Alkylresten substituiertes Styrol wie p-Methylstyrol oder tert.-Butylstyrol sowie α-Methylstyrol, bevorzugt Styrol, einsetzen.

Bei Verwendung von mehr als einem Monomeren für die Pfropfhülle kann ein Schalenaufbau erstrebenswert sein. Die verschiedenen Schalen können dabei verschiedene Zusammensetzungen besitzen. Dies wird im allgemeinen erzielt, indem verschiedene Monomeren(mischungen) zu verschiedenen Zeiten bei der Polymerisation zugegeben werden.

Die Herstellung der Pfropfhülle (C2) erfolgt erfindungsgemäß in Gegenwart des Kerns (C1) beispielsweise nach dem Verfahren beschrieben in Encyclopedia of Polymer Science and Engineering, Vol. 1, S. 401 ff.

Das Pfropfcopolymerisat kann z.B. durch Sprühtrocknung oder durch Koagulation isoliert werden. Derartige Produkte sind handelsüblich und weisen bevorzugt eine mittlere Teilchengröße (dso) im Bereich von 40 bis 500 nm, besonders bevorzugt von 50 bis 300 nm, auf.

Als C₁-C₈-Alkylester der Methacrylsäure (Komponente D1) verwendet man erfindungsgemäß Methylmethacrylat ("MMA"), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere.

Als C₁-C₈-Alkylester der Acrylsäure (Komponente D2) kann man Methylacrylat ("MA"), Ethylacrylat, Propylacrylat, n-Butylacrylat, Isobutylacrylat, sek.-Butylacrylat, tert.-Butylacrylat, Pentylacrylat, Hexylacrylat, Heptylacrylat, Octylacrylat oder 2-Ethylhexylacrylat, wobei Methylacrylat besonders bevorzugt ist, sowie Mischungen dieser Monomere untereinander einsetzen.

Als copolymerisierbares vernetzendes Monomer (Komponente D3) setzt man erfindungsgemäß di- oder polyfunktionelle Comonomere ein wie Alkylenglycoldimethacrylate wie Ethylenglycoldimethacrylat, Propylenglycoldimethacrylat, 1,3-Butylenglycoldimethacrylat und 1,4-Butylenglycoldimethacrylat,

Alkylenglycoldiacrylate wie Ethylenglycoldiacrylat, Propylenglycoldiacrylat, 1,3-Butylenglycoldiacrylat und 1,4-Butylenglycoldiacrylat,

Acrylate und Methacrylate von Glycerin, Trimethylolpropan, Pentaerythrit, Inosit und ähnliche Zuckeralkohole,
Acryl- und Methacrylamide von Ethylendiamin und andere aliphatische Di- und Polyamine,
Triacryl- und Trimethacrylamide,
Triallylcyanurat und Triallylisocyanurat sowie
Vinylbenzole wie Divinylbenzol und Trivinylbenzol.

Die Comonomeren D3 werden aufgrund ihrer Eigenschaft, sich gleichmäßig in die polymere Phase einzubauen, auch als "Polymerisationsvernetzer" bezeichnet. Während der Polymerisationsreaktion ist die Geschwindigkeit ihres Verbrauchs im wesentlichen vergleichbar mit derjenigen des Hauptmonomeren, wodurch eine Vernetzung innerhalb der Phase zustande kommt.

Als polare Monomere (Komponente D4) setzt man erfindungsgemäß ein Monomer oder eine Monomermischung ein, ausgewählt aus der Gruppe, bestehend aus Methacrylsäure, Acrylsäure, Hydroxyethylacrylat, Hydroxyethylmethacrylat, Dimethylaminoethylacrylat und Dimethylaminoethylmethacrylat.

Die Herstellung der Komponente D nimmt man üblicherweise nach bekannten Verfahren vor, beispielsweise nach dem in der EP-A 443 609 beschriebenen. Im übrigen sind Polymerisate, die unter die Definition von Komponente D fallen, kommerziell erhältlich.

Als Zusatzstoffe kommen bevorzugt solche in Betracht, die sich in den Komponenten A und B klar lösen. Beispielsweise seien genannt: Farbstoffe, Stabilisatoren, Schmiermittel und Antistatika.

Das Vermischen der Komponenten A, B, C, D und gewünschtenfalls E nimmt man üblicherweise in der Schmelze bei Temperaturen im Bereich von 200 bis 300°C, vorzugsweise von 220 bis 280°C, vor.

Eine Voraussetzung für die Transparenz der erfindungsgemäßen Formmassen ist, daß die Differenz zwischen dem Brechungsindes der (weichen) Komponente C und dem des Gemisches der (harten) Komponenten A, B und D sowie gegebenenfalls der Füllstoffe E weniger als 0,005 beträgt. Der Brechungsindex des Gemisches der harten Komponenten A, B und D ergibt sich durch Linearkombination aus den Brechzahlen der Einzelkomponenten mit deren Gewichtsanteilen. Bei vorgegebenem Brechungsindex der Weichkomponente C wird der Brechungsindex der Hartkomponente durch geeignete Wahl des Verhältnisses (A+D):B angeglichen. Eine weitere wesentliche Voraussetzung für die Unabhängigkeit der Transparenz von der Verarbeitungstemperatur ist die Einhaltung der angegebenen Zusammensetzung der Komponente B und die Verträglichkeit der Komponente D mit der Gesamtmatrix.

Aus den erfindunsgemäßen Formmassen können hauptsächlich durch Spritzgießen oder Blasen Formteile hergestellt werden. Man kann die Formmassen auch verpressen, kalandrieren, extrudieren oder vakuumformen. Sie können überall dort eingesetzt werden, wo die Fließfähigkeit der herkömmlichen transparenten Kunststoffe nicht genügt, beispielsweise bei Automobilheckleuchten, durchsichtigen Haushaltsgeräten, Spielwaren, Beschichtungen in Verbund mit den verschiedensten Werkstoffen.

Die Verarbeitungsbreite der erfindungsgemäßen, transparenten, thermoplastischen Mischungen oberhalb 200°C ist nicht durch Unverträglichkeitserscheinungen eingeschränkt. Die Mischungen lassen sich zwischen 200 und 300°C ohne Einbußen in der Transparenz, ohne merkbare Vergilbung und ohne eine lästige Geruchsbildung verarbeiten. Im Spritzguß verarbeitete Formteile zeigen keinerlei Bindenahtmarkierungen und zeichnen sich durch eine hohe Transparenz und eine matte Oberfläche aus.

### Beispiele

Die in den Beispielen und Vergleichsversuchen genannten Verhältnisse und Prozente beziehen sich auf das Gewicht.

Der Brechungsindex n_{D}²⁵ wurde mit einem Abbé-Refraktometer nach der Methode zur Messung der Brechungsindizes bei festen Körpern bestimmt (s. Ullmanns Encyklopädie der technischen Chemie, Band 2/1, S. 486, Herausgeber E. Foerst; Urban & Schwarzenberg, München-Berlin 1961).

Die optischen Eigenschaften (Glanz) wurden analog zu DIN 67 530 (bei 45°) ermittelt. Die Charpy-Zähigkeit (an) wurde gemäß ISO 179 bestimmt. Die Spannungsrißbeständigkeit wurde analog zu DIN V EN 2155/T19 (mit Ethanol als Lösungsmittel) bestimmt.

Die mittlere Teilchengröße und die Teilchengrößenverteilung wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als d₅₀-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem dso-Wert entspricht. Ebenso haben dann 50 Gew.-% der Teilchen einen größeren Durchmesser als der dso-Wert.

Für die Beispiele und Vergleichsbeispiele wurden die nachfolgend näher bezeichneten Polymerisate verwendet:
A Copolymerisat, hergestellt aus Methylmethacrylat (MMA) und Methylacrylat (MA) im Verhältnis 94:6 (n_{D}²⁵ = 1,492, M_{W} = 110.000 g/mol);
B Copolymerisat, hergestellt aus Styrol (S) und Acrylnitril (AN) im Verhältnis 81:19 (M_{W} = 250.000 g/mol, n_{D}²⁵ = 1,575);
C Pfropfcopolymerisat, hergestellt aus 45 Gew.-Teilen einer Mischung, bestehend aus 51 Gew.-Teilen MMA, 44 Gew.-Teilen Styrol und 5 Gew.-Teilen n-Butylacrylat, polymerisiert in Gegenwart von 55 Gew.-Teilen eines Kerns, erhältlich durch Polymerisation von 72 Gew.-Teilen Butadien und 28 Gew.-Teilen Styrol (n_{D}²⁵ = 1,5400, d₅₀ = 118 nm);
D Copolymerisat, hergestellt aus 97 Gew.-Teilen MMA und 3 Gew.-Teilen Butandioldimethacrylat (n_{D}²⁵ = 1,4900; d₅₀ = 4580 nm).

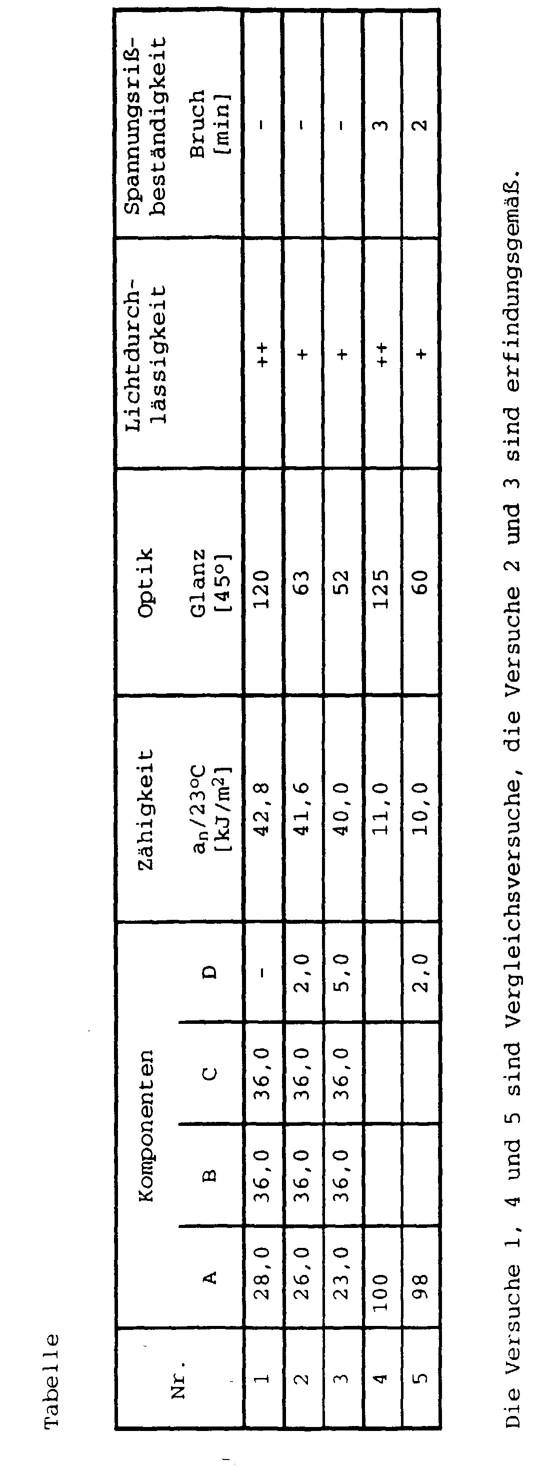

## Patentansprüche

1. Thermoplastische Formmassen, enthaltend eine Mischung aus im wesentlichen
(A) Wenigstens 15 Gew.-% eines Methacrylat-Polymerisates, erhältlich durch Polymerisation einer Mischung, bestehend im wesentlichen aus
(A1) 90 bis 100 Gew.-%, bezogen auf (A), Methylmethacrylat, und
(A2) 0 bis 10 Gew.-%, bezogen auf (A), eines C₁-C₈-Alkylesters der Acrylsäure, und
(B) 10 bis 50 Gew.-% eines Copolymerisates, erhältlich durch Polymerisation einer Mischung, bestehend im wesentlichen aus
(B1) 78 bis 88 Gew.-%, bezogen auf (B), eines vinylaromatischen Monomeren und
(B2) 12 bis 22 Gew.-%, bezogen auf (B), eines Vinylcyanids
und
(C) 20 bis 50 Gew.-% eines Pfropfcopolymerisates, erhältlich im wesentlichen aus
(C1) 50 bis 80 Gew.-% eines Kerns, erhältlich durch Polymerisation eines Monomerengemisches, bestehend im wesentlichen aus
(C11) 50 bis 100 Gew.-% eines 1,3-Diens und
(C12) 0 bis 50 Gew.-% eines vinylaromatischen Monomeren
und
(C2) 20 bis 50 Gew.-% einer Pfropfhülle, erhältlich durch Polymerisation eines Monomerengemisches in Gegenwart des Kern (C1), bestehend im wesentlichen aus
(C21)40 bis 100 Gew.-% eines C₁-C₈-Alkylesters der Methacryl- oder Acrylsäure und
(C22)0 bis 60 Gew.-% eines vinylaromatischen Monomeren,
mit der Maßgabe, daß man die mittlere Teilchengröße (d₅₀) des Pfropfcopolymerisates im Bereich von 40 bis 500 nm wählt, und
(D) 0,5 bis 15 Gew.-% eines vernetzten Methacrylat-Polymerisates, erhältlich durch Polymerisation einer Mischung, bestehend im wesentlichen aus
(D1) 80 bis 99,5 Gew.-% eines C₁-C₈-Alkylesters der Methacrylsäure,
(D2) 0 bis 15 Gew.-% eines C₁-C₈-Alkylesters der Acrylsäure,
(D3) 0,5 bis 5 Gew.-% eines mit D1 und D2 copolymerisierbaren vernetzenden Monomeren und
(D4) 0 bis 10 Gew.-% eines polaren Monomeren, ausgewählt aus der Gruppe, bestehend aus Methacrylsäure, Acrylsäure, Hydroxyethylacrylat, Hydroxyethylmethacrylat, Dimethylaminoethylacrylat und Dimethylaminoethylmethacrylat,
mit der Maßgabe, daß man die mittlere Teilchengröße (d₅₀) von D im Bereich von 50 bis 80.000 nm wählt,
und
(E) 0 bis 20 Gew.-% üblichen Zusatzstoffen, bezogen auf die Summe der Komponenten A, B, C und D, wobei sich die Gew.-Prozentangaben von A, B, C und D auf 100 addieren und die Differenz zwischen dem Brechungsindex der Komponente C und dem des Gemisches der Komponenten A, B und D-oder dem des Gemisches der Komponenten A, B, D und E weniger als 0,005 beträgt.

2. Verfahren zur Herstellung der thermoplastischen Formmassen gemäß Anspruch 1, dadurch gekennzeichnet, daß man
(A) Wenigstens 15 Gew.-% eines Methacrylat-Polymerisates, erhältlich durch Polymerisation einer Mischung, bestehend im wesentlichen aus
(A1) 90 bis 100 Gew.-%, bezogen auf (A), Methylmethacrylat, und
(A2) 0 bis 10 Gew.-%, bezogen auf (A), eines C₁-C₈-Alkylesters der Acrylsäure, und
(B) 10 bis 50 Gew.-% eines Copolymerisates, erhältlich durch Polymerisation einer Mischung, bestehend im wesentlichen aus
(B1) 78 bis 88 Gew.-%, bezogen auf (B), eines vinylaromatischen Monomeren und
(B2) 12 bis 22 Gew.-%, bezogen auf (B), eines Vinylcyanids
und
(C) 20 bis 50 Gew.-% eines Pfropfcopolymerisates, erhältlich im wesentlichen aus
(C1) 50 bis 80 Gew.-% eines Kerns, erhältlich durch Polymerisation eines Monomerengemisches, bestehend im wesentlichen aus
(C11) 50 bis 100 Gew.-% eines 1,3-Diens und
(C12)0 bis 50 Gew.-% eines vinylaromatischen Monomeren
und
(C2) 20 bis 50 Gew.-% einer Pfropfhülle, erhältlich durch Polymerisation eines Monomerengemisches in Gegenwart des Kern (C1), bestehend im wesentlichen aus
(C21) 40 bis 100 Gew.-% eines C₁-C₈-Alkylesters der Methacryl- oder Acrylsäure und
(C22) 0 bis 60 Gew.-% eines vinylaromatischen Monomeren,
mit der Maßgabe, daß man die mittlere Teilchengröße (dso) des Pfropfcopolymerisates im Bereich von 40 bis 500 nm wählt, und
(D) 0,5 bis 15 Gew.-% eines vernetzten Methacrylat-Polymerisates, erhältlich durch Polymerisation einer Mischung, bestehend im wesentlichen aus
(D1) 80 bis 99,5 Gew.-% eines C₁-C₈-Alkylesters der Methacrylsäure,
(D2) 0 bis 15 Gew.-% eines C₁-C₈-Alkylesters der Acrylsäure,
(D3) 0,5 bis 5 Gew.-% eines mit D1 und D2 copolymerisierbaren vernetzenden Monomeren und
(D4) 0 bis 10 Gew.-% eines polaren Monomeren, ausgewählt aus der Gruppe, bestehend aus Methacrylsäure, Acrylsäure, Hydroxyethylacrylat, Hydroxyethylmethacrylat, Dimethylaminoethylacrylat und Dimethylaminoethylmethacrylat,
mit der Maßgabe, daß man die mittlere Teilchengröße (d₅₀) von D im Bereich von 50 bis 80.000 nm wählt,
und
(E) 0 bis 20 Gew.-% üblichen Zusatzstoffen, bezogen auf die Summe der Komponenten A, B, C und D, wobei sich die Gew.-Prozentangaben von A, B, C und D auf 100 addieren und die Differenz zwischen dem Brechungsindex der Komponente C und dem des Gemisches der Komponenten A, B und D oder dem des Gemisches der Komponenten A, B, D und E weniger als 0,005 beträgt, bei Temperaturen im Bereich von 200 bis 300°C mischt.

3. Verwendung der thermoplastischen Formmassen gemäß Anspruch 1 oder hergestellt gemäß Anspruch 2 zur Herstellung von Formkörpern.

4. Formkörper, erhältlich durch die Verwendung gemäß Anspruch 3.

## Claims

1. A thermoplastic molding material containing a mixture comprising essentially
(A) at least 15 % by weight of a methacrylate polymer obtainable by polymerization of a mixture consisting essentially of
(A1) from 90 to 100 % by weight, based on (A), of methyl methacrylate and
(A2)from 0 to 10 % by weight, based on (A), of a C₁-C₈-alkyl ester of acrylic acid, and
(B) from 10 to 50 % by weight of a copolymer obtainable by polymerization of a mixture consisting essentially of
(B1) from 78 to 88 % by weight, based on (B), of a vinylaromatic monomer and
(B2)from 12 to 22 % by weight, based on (B), of a vinyl cyanide,
and
(C) from 20 to 50 % by weight of a graft copolymer obtainable essentially from
(C1) 50-80 % by weight of a core obtainable by polymerization of a monomer mixture consisting essentially of
(C11) from 50 to 100 % by weight of a 1,3-diene and
(C12)from 0 to 50 % by weight of a vinylaromatic monomer
and
(C2)20-50 % by weight of a graft shell obtainable by polymerization of a monomer mixture in the presence of the core (C1) consisting essentially of
(C21) from 40 to 100 % by weight of a C₁-C₈-alkyl ester of methacrylic or acrylic acid and
(C22)from 0 to 60 % by weight of a vinylaromatic monomer,
with the proviso that the median particle size (d₅₀) of the graft copolymer is chosen in the range from 40 to 500 nm, and
(D) from 0.5 to 15 % by weight of a crosslinked methacrylate polymer obtainable by polymerization of a mixture consisting essentially of
(D1) from 80 to 99.5 % by weight of a C₁-C₈-alkyl ester of methacrylic acid,
(D2)from 0 to 15 % by weight of a C₁-C₈-alkyl ester of acrylic acid,
(D3)from 0.5 to 5 % by weight of a crosslinking monomer copolymerizable with D1 and D2 and
(D4)from 0 to 10 % by weight of a polar momoner selected from the group consisting of methacrylic acid, acrylic acid, hydroxyethyl acrylate, hydroxyethyl methacrylate, dimethylaminoethyl acrylate and dimethylaminoethyl methacrylate,
with the proviso that the median particle size (d₅₀) of D is chosen in the range from 50 to 80,000 nm,
and
(E) from 0 to 20 % by weight of conventional additives, based on the sum of the components A, B, C and D, where the stated % by weight of A, B, C and D sum to 100 and the difference between the refractive index of the component C and that of the mixture of the components A, B and D or that of the mixture of the components A, B, D and E is less than 0.005.

2. A process for the preparation of the thermoplastic molding material as claimed in claim 1, wherein
(A) at least 15 % by weight of a methacrylate polymer obtainable by polymerization of a mixture consisting essentially of
(A1) from 90 to 100 % by weight, based on (A), of methyl methacrylate and
(A2)from 0 to 10 % by weight, based on (A), of a C₁-C₈-alkyl ester of acrylic acid, and
(B) from 10 to 50 % by weight of a copolymer obtainable by polymerization of a mixture consisting essentially of
(B1)from 78 to 88 % by weight, based on (B), of a vinylaromatic monomer and
(B2)from 12 to 22 % by weight, based on (B), of a vinyl cyanide,
and
(C) from 20 to 50 % by weight of a graft copolymer obtainable essentially from
(C1)50-80 % by weight of a core obtainable by polymerization of a monomer mixture consisting essentially of
(C11)from 50 to 100 % by weight of a 1,3-diene and
(C12)from 0 to 50 % by weight of a vinylaromatic monomer
and
(C2)20-50 % by weight of a graft shell obtainable by polymerization of a monomer mixture in the presence of the core (C1) consisting essentially of
(C21) from 40 to 100 % by weight of a C₁-C₈-alkyl ester of methacrylic or acrylic acid and
(C22)from 0 to 60 % by weight of a vinylaromatic monomer,
with the proviso that the median particle size (d₅₀) of the graft copolymer is chosen in the range from 40 to 500 nm, and
(D) from 0.5 to 15 % by weight of a crosslinked methacrylate polymer obtainable by polymerization of a mixture consisting essentially of
(D1) from 80 to 99.5 % by weight of a C₁-C₈-alkyl ester of methacrylic acid,
(D2) from 0 to 15 % by weight of a C₁-C₈-alkyl ester of acrylic acid,
(D3) from 0.5 to 5 % by weight of a crosslinking monomer copolymerizable with D1 and D2 and
(D4) from 0 to 10 % by weight of a polar momoner selected from the group consisting of methacrylic acid, acrylic acid, hydroxyethyl acrylate, hydroxyethyl methacrylate, dimethylaminoethyl acrylate and dimethylaminoethyl methacrylate,
with the proviso that the median particle size (d₅₀) of D is chosen in the range from 50 to 80,000 nm,
and
(E) from 0 to 20 % by weight of conventional additives, based on the sum of the components A, B, C and D, where the stated % by weight of A, B, C and D sum to 100 and the difference between the refractive index of the component C and that of the mixture of the components A, B and D or that of the mixture of the components A, B, D and E is less than 0.005, are mixed at from 200 to 300°C.

3. Use of the thermoplastic molding material as claimed in claim 1 or prepared as claimed in claim 2 for the production of moldings.

4. A molding obtainable by the use as claimed in claim 3.

## Revendications

1. Masses à mouler thermoplastiques contenant un mélange constitué essentiellement
(A) à concurrence d'au moins 15 % en poids, par un polymère de méthacrylate que l'on obtient par polymérisation d'un mélange constitué essentiellement
(A1) à concurrence de 90 à 100 % en poids, rapportés à (A), par du méthacrylate de méthyle et
(A2) à concurrence de 0 à 10 % en poids, rapportés à (A), par un ester alkylique en C₁-C₈ d'acide acrylique, et
(B) à concurrence de 10 à 50 % en poids, par un copolymère que l'on obtient par polymérisation d'un mélange constitué essentiellement
(B1) à concurrence de 78 à 88 % en poids, rapportés à (B), par un monomère vinylaromatique et
(B2) à concurrence de 12 à 22 % en poids, rapportés à (B), par un acrylonitrile,
et
(C) à concurrence de 20 à 50 % en poids, par un copolymère greffé que l'on obtient essentiellement à partir
(C1) à concurrence de 50 à 80 % en poids, d'un noyau que l'on obtient par polymérisation d'un mélange de monomères constitué essentiellement
(C11) à concurrence de 50 à 100 % en poids, par un 1,3-diène et
(C12) à concurrence de 0 à 50 % en poids, par un monomère vinylaromatique
et
(C2) à concurrence de 20 à 50 % en poids, d'une enveloppe de greffage que l'on obtient par polymérisation d'un mélange de monomères en présence du noyau (C1), mélange constitué essentiellement
(C21) à concurrence de 40 à 100 % en poids, par un ester alkylique en C₁-C₈ d'acide méthacrylique ou d'acide acrylique et,
(C22) à concurrence de 0 à 60 % en poids, par un monomère vinylaromatique
dans la mesure où l'on sélectionne la granulométrie moyenne (d₅₀) du copolymère greffé dans le domaine de 40 à 500 nm, et
(D) à concurrence de 0,5 à 1,5 % en poids, par un polymère de méthacrylate réticulé que l'on obtient par polymérisation d'un mélange constitué essentiellement
(D1) à concurrence de 80 à 99,5 % en poids, par un ester alkylique en C₁-C₈ d'acide méthacrylique
(D2) à concurrence de 0 à 15 % en poids, par un ester alkylique en C₁-C₈ d'acide acrylique
(D3) à concurrence de 0,5 à 5 % en poids, par un monomère pouvant être copolymérisé et réticulé avec (D1) et (D2) et
(D4) à concurrence de 0 à 10 % en poids, par un monomère polaire, choisi parmi le groupe constitué de l'acide méthacrylique, de l'acide acrylique, de l'hydroxyéthylacrylate, de l'hydroxyéthylméthacrylate, du diméthylaminoéthylacrylate et du diméthylaminoéthyl-méthacrylate,
dans la mesure où l'on sélectionne la granulométrie moyenne (d₅₀) de (D) dans le domaine de 50 à 80000 nm, et
(E) à concurrence de 0 à 20 % en poids, par des additifs usuels, rapportés à la somme des composants A, B, C et D, les indications en pour cent en poids de A, B, C et D s'additionnant pour donner 100 et la différence entre l'indice de réfraction du composant C et celui du mélange des composants A, B et D ou celui des composants A, B, D et E est inférieure à 0,005.

2. Procédé pour la préparation de masses à mouler thermoplastiques selon la revendication 1, caractérisé en ce qu'on mélange
(A) à concurrrence d'au moins 15 % en poids, un polymère de méthacrylate que l'on obtient par polymérisation d'un mélange constitué essentiellement
(A1) à concurrence de 90 à 100 % en poids, rapportés à (A), par du méthacrylate de méthyle, et
(A2) à concurrence de 0 à 10 % en poids, rapportés à (A), par un ester alkylique en C₁ à C₈ d'acide acrylique, et
(B) à concurrence de 10 à 50 % en poids, un copolymère que l'on obtient par polymérisation d'un mélange constitué essentiellement
(B1) à concurrence de 78 à 88 % en poids, rapportés à (B), par un monomère vinylaromatique et
(B2) à concurrence de 12 à 22 % en poids, rapportés à (B), par un acrylonitrile,
et
(C) à concurrence de 20 à 50 % en poids, un copolymère greffé que l'on obtient essentiellement à partir
(C1) à concurrence de 50 à 80 % en poids, d'un noyau que l'on obtient par polymérisation d'un mélange de monomères constitué essentiellement
(C11) à concurrence de 50 à 100 % en poids, par un 1,3-diène et
(C12) à concurrence de 0 à 50 % en poids, par un monomère vinylaromatique
et
(C2) à concurrence de 20 à 50 % en poids, d'une enveloppe de greffage que l'on obtient par polymérisation d'un mélange de monomères en présence du noyau (C1), mélange constitué essentiellement
(C21) à concurrence de 40 à 100 % en poids, par un groupe ester alkylique en C₁-C₈ d'acide méthacrylique ou d'acide acrylique et,
(C22) à concurrence de 0 à 60 % en poids, par un monomère vinylaromatique
dans la mesure où l'on sélectionne la granulométrie moyenne (d₅₀) du copolymère greffé dans le domaine de 40 à 500 nm, et
(D) à concurrence de 0,5 à 1,5 % en poids, par un polymère de méthacrylate réticulé que l'on obtient par polymérisation d'un mélange constitué essentiellement
(D1) à concurrence de 80 à 99,5 % en poids, par un ester alkylique en C₁-C₈ d'acide méthacrylique
(D2) à concurrence de 0 à 15 % en poids, par un ester alkylique en C₁-C₈ d'acide acrylique
(D3) à concurrence de 0,5 à 5 % en poids, par un monomère pouvant être copolymérisé et réticulé avec (D1) et (D2) et
(D4) à concurrence de 0 à 10 % en poids, par un monomère polaire, choisi parmi le groupe constitué de l'acide méthacrylique, de l'acide acrylique, de l'hydroxyéthylacrylate, de l'hydroxyéthylméthacrylate, du diméthylaminoéthylacrylate et du diméthylaminoéthyl-méthacrylate,
dans la mesure où l'on sélectionne la granulométrie moyenne (d₅₀) de (D) dans le domaine de 50 à 80000 nm, et
(E) à concurrence de 0 à 20 % en poids, par des additifs usuels, rapportés à la somme des composants A, B, C et D, les indications en pour cent en poids de A, B, C et D s'additionnant pour donner 100 et la différence entre l'indice de réfraction du composant C et celui du mélange des composants A, B et D ou celui du mélange des composants A, B, D et E est inférieure à 0,005, à des températures dans le domaine de 200 à 300°C.

3. Utilisation des masses à mouler thermoplastiques selon la revendication 1 ou préparées conformément à la revendication 2, pour la fabrication de corps moulés.

4. Corps moulés que l'on obtient par l'utilisation selon la revendication 3.
